# EUROPÄISCHE PATENTSCHRIFT

(11) **EP 0 958 977 B1**
(45) Veröffentlichungstag und Bekanntmachung des Hinweises auf die Patenterteilung: **05.10.2005**
(21) Anmeldenummer: 99109600.9
(22) Anmeldetag: 14.05.1999
(51) Int. Cl.: B60S 3/04

(54) **Reinigungsvorrichtung für Karosserien von Fahrzeugen**
Cleaning assembly for body of vehicles
Installation de nettoyage pour carosserie de véhicules

(30) Priorität: 19.05.1998 DE 19822537
(43) Veröffentlichungstag der Anmeldung: 24.11.1999
(73) Patentinhaber: Baral, Karl-Heinz, D-71711 Murr (DE)
(72) Erfinder: Baral, Karl-Heinz, D-71711 Murr (DE)
(74) Vertreter: Kohl, Karl-Heinz

(56) Entgegenhaltungen:
- US-A- 3 805 410
- US-A- 4 622 714
- US-A- 4 771 552

## Beschreibung

Die Erfindung betrifft eine Reinigungsvorrichtung für Karosserien von Fahrzeugen nach dem Oberbegriff des Anspruches 1.

Bei solchen Reinigungsvorrichtungen wird auf der Transportvorrichtung die zu reinigende Karosserie durch einen Innenraum der Reinigungsvorrichtung transportiert. Aus der Seitendüse und aus der Dachdüse austretende Druckluft löst an der Karosserie haftende Staub/Schmutzteilchen, die dann von der Absaugung abgesaugt werden. Diese Reinigungsvorrichtungen sind hinsichtlich ihrer konstruktiven Gestaltung an den jeweiligen Einsatzfall angepaßt. Diese monolitische Bauweise hat den Nachteil, daß beispielsweise ein Umbau oder eine Erweiterung der Reinigungsvorrichtung nicht möglich ist. Für solche Fälle muß eine neue Reinigungsvorrichtung gebaut werden. Fallen einzelne Teile der Reinigungsvorrichtung aus, ist eine Reparatur nur mit Mühe möglich.

Aus der US-A-4 622 714 ist eine gattungsgemäße Reinigungsvorrichtung bekannt, bei der die zu reinigende Karosserie auf einer Transportvorrichtung durch einen Innenraum der Vorrichtung transportiert und dabei mit Druckluft beaufschlagt wird. Die Druckluft wird über Seitendüsen und Dachdüsen in Richtung auf die Karosserie gelenkt. Die Düsen sind an Modulen vorgesehen, die lösbar auf einem Unterteil befestigt sind. Die aus den Druckluftdüsen austretende Luft vermengt sich während der Reinigung der Karosserie mit Staub und Schmutzteilchen, die sich wieder auf der Karosserie absetzen können.

Es ist auch eine Reinigungsvorrichtung bekannt (US-A-4 771 552), bei der zur Reinigung der durch die Vorrichtung transportierten Karosserie seitliche Druckluftdüsen vorgesehen sind. Ferner weist diese Vorrichtung Saugöffnungen auf, über die die mit Staub und Schmutzteilchen beladene Druckluft aus der Vorrichtung entfernt werden kann.

Der Erfindung liegt die Aufgabe zugrunde, die gattungsgemäße Reinigungsvorrichtung so auszubilden, daß sie konstruktiv einfach aufgebaut und ohne Probleme an den jeweiligen Einsatzfall angepaßt werden kann.

Diese Aufgabe wird bei der gattungsgemäßen Reinigungsvorrichtung erfindungsgemäß mit den kennzeichnenden Merkmalen des Anspruches 1 gelöst.

Die erfindungsgemäße Reinigungsvorrichtung wird aus Modulen errichtet, denen die Seitendüse und die Dachdüse zugeordnet sind. Die Module werden auf dem Unterteil lösbar befestigt. Aufgrund der Modulbauweise kann die Reinigungsvorrichtung ohne Problem erweitert oder umgebaut werden. Ist eine Reparatur oder ein Austausch von Teilen der erfindungsgemäßen Reinigungsvorrichtung notwendig, kann das jeweilige Modul ohne Probleme abgebaut und durch ein anderes Modul ersetzt werden. Mit dem Absaugmodul wird die mit Staub/Schmutzteilchen vermengte Luft abgesaugt, so daß sie sich nicht an der Karosserie ablagern kann. Das Absaugmodul kann wie die Düsenmodule einfach abgebaut und montiert werden.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: eine Draufsicht auf eine erfindungsgemäße Reinigungsvorrichtung, innerhalb der sich eine zu reinigende Karosserie eines Fahrzeuges befindet,
- Fig. 2: die Reinigungsvorrichtung gemäß Fig. 1 ohne Karosserie,
- Fig. 3: eine Seitenansicht der erfindungsgemäßen Reinigungsvorrichtung,
- Fig. 4: eine Ansicht in Richtung des Pfeiles IV in Fig. 3,
- Fig. 5: eine Seitenansicht einer Dachdüse der erfindungsgemäßen Reinigungsvorrichtung,
- Fig. 6: einen Schnitt längs der Linie VI-VI in Fig. 5,
- Fig. 7: eine Seitenansicht der Dachdüse,
- Fig. 8: eine Ansicht auf einen Auslaßschlitz der Dachdüse,
- Fig. 9: in Seitenansicht eine Seitendüse der erfindungsgemäßen Reinigungsvorrichtung,
- Fig. 10: eine Vorderansicht der Seitendüse gemäß Fig. 9,
- Fig. 11: eine Draufsicht auf einen Teil der Seitendüse gemäß Fig. 9,

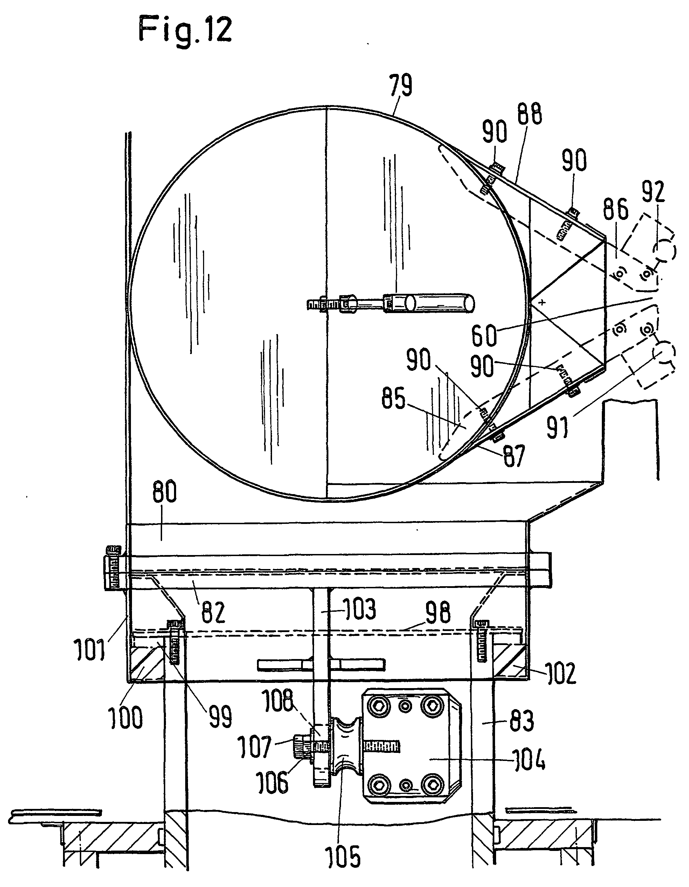

- Fig. 12: einen Teil einer Lagerung der Dachdüse gemäß den Fig. 5 bis 7.

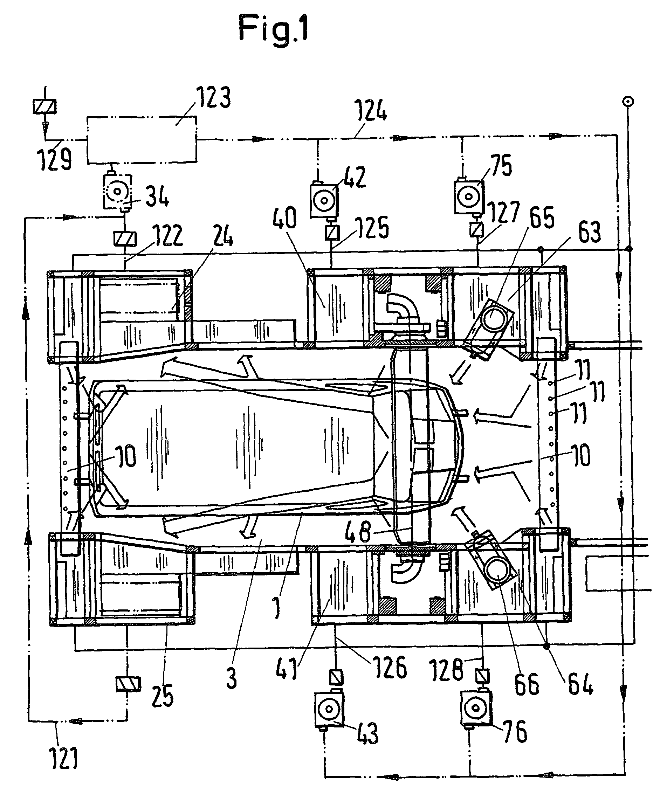

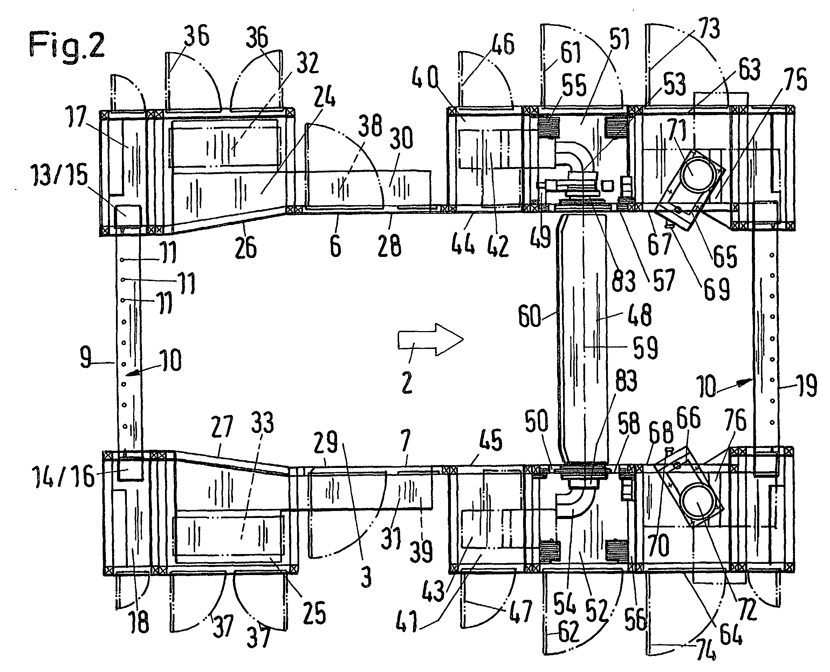

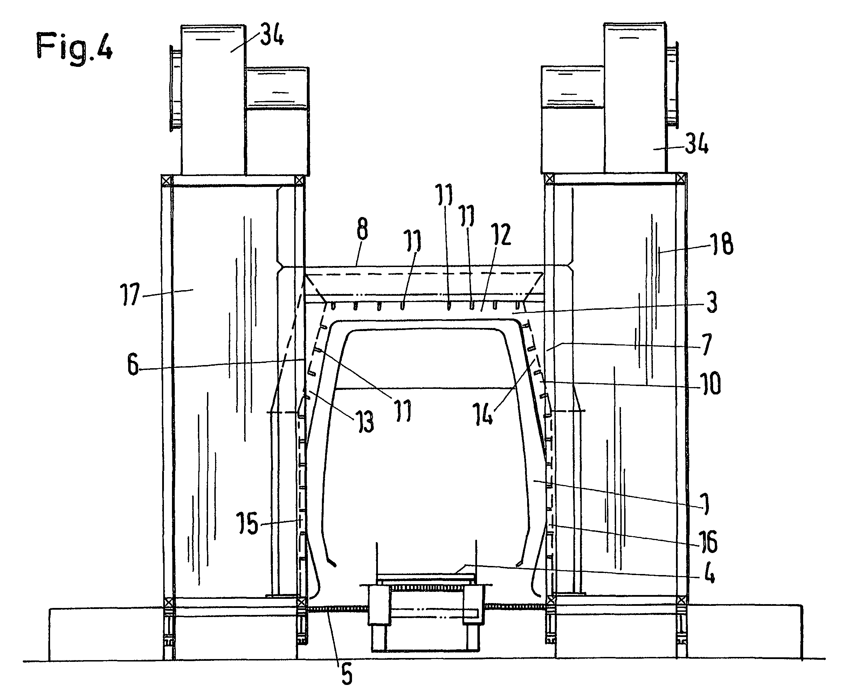

Die Reinigungsvorrichtung dient dazu, Schmutz, Staub und dergleichen von Karosserien für Fahrzeuge, wie Personen- oder Lastkraftwagen, zu befreien, bevor die Karosserien der weiteren Bearbeitung, beispielsweise einem Lackiervorgang, unterworfen werden. Die Karosserie 1 (Fig. 1) wird mit einer geeigneten Transportvorrichtung 4 (Fig. 4) durch die Reinigungsvorrichtung in Pfeilrichtung 2 (Fig. 2) transportiert. Während des Transportes durch die Reinigungsvorrichtung wird die Karosserie mit Druckluft beaufschlagt, die die Schmutz- und/oder Staubteilchen an der Karosserie 1 löst und aufwirbelt, so daß diese aus dem Innenraum 3 der Reinigungsvorrichtung abgesaugt werden können. Die Transportvorrichtung 4 ist in Fig. 4 schematisch dargestellt. Sie befindet sich in der Nähe eines Bodens 5, der den Innenraum 3 der Reinigungsvorrichtung nach unten abdeckt. Außerdem wird der Innenraum 3 von Seitenwänden und einer Decke 8 begrenzt. An den beiden Stirnseiten ist der Innenraum 3 offen.

An der Eintrittsöffnung 9 (Fig. 2) des Innenraumes 3 befindet sich eine Düseneinrichtung 10, die eine Vielzahl von Düsen 11 aufweist, aus denen Druckluft austritt. Der aus den einzelnen Düsen 11 austretende Luftstrom vereinigt sich zu einem Luftschirm 12, der zumindest im wesentlichen die Eintrittsöffnung 9, in Transportrichtung 2 gesehen, erfaßt und, wie sich aus Fig. 1 ergibt, leicht nach innen in Richtung auf den Innenraum 3 gerichtet ist. Dadurch wird gewährleistet, daß kein Staub oder Schmutz aus dem Innenraum 3 nach außen gelangen kann. Vorteilhaft ist es, wenn die Düsen 11 der Düseneinrichtung 10 verstellbar sind, so daß die Richtung der austretenden Luftströme optimal eingestellt werden kann.

Wie Fig. 4 zeigt, ist die Düseneinrichtung 10 in Ansicht im wesentlichen U-förmig ausgebildet. Sie hat einen horizontalen, an der Decke 8 vorgesehenen Düsenteil 12, der an beiden Enden in nach unten divergierende Düsenteile 13, 14 übergeht. Diese Düsenteile 13, 14 gehen etwa in halber Höhe des Innenraumes 3 in senkrecht nach unten ragende Düsenteile 15, 16 über, die vorteilhaft weitgehend innerhalb von seitlichen Modulen 17 und 18 angeordnet sind. Beim Durchfahren des durch die Düseneinrichtung 10 gebildeten Luftschildes werden bereits beim Eintritt der Karosserie 1 in den Innenraum Schmutz/Staubteilchen gelöst. Die Luft wird mit hohem Druck, beispielsweise 6 bar, der Düseneinrichtung 10 zugeführt, so daß die Schmutz/Staubteilchen wirksam entfernt werden.

Am gegenüberliegenden Austrittsende 19 (Fig. 2) des Innenraumes 3 ist eine gleiche Düseneinrichtung 10 vorgesehen. Ihre Düsen 11 sind so eingestellt, daß die Luft schräg und in Achsrichtung nach innen in den Innenraum 3 geblasen wird (Fig. 1). Die aus dieser austrittsseitigen Düseneinrichtung 10 austretende Druckluft strömt der zu reinigenden Karosserie 1 entgegen. Auch durch diesen Luftschirm, der, in Transportrichtung 2 gesehen, das Austrittsende 19 zumindest im wesentlichen abdeckt, wird zuverlässig verhindert, daß Staub/Schmutzteilchen aus dem Innenraum 3 nach außen gelangen.

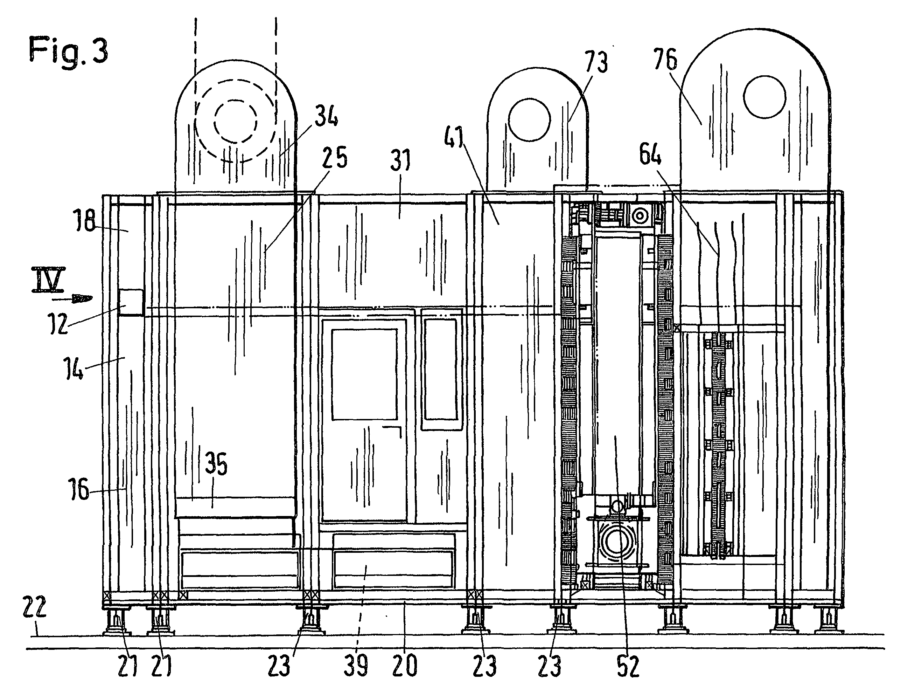

Die beiden eingangsseitigen Module 17, 18 liegen einander gegenüber und sind spiegelbildlich zueinander angeordnet. Sie sind quaderförmig ausgebildet und stehen hochkant (Fig. 4) auf einem Grundrahmen 20 (Fig. 3), der seinerseits mit Füßen 21 auf dem Untergrund 22 aufliegt. Die Füße 21 haben vorteilhaft Stellschrauben 23, mit denen der Grundrahmen 20 in bezug auf den Untergrund 22 stufenlos in der Höhe eingestellt werden kann.

An die beiden eintrittsseitigen Module 17, 18 schließt jeweils ein Absaugmodul 24, 25 an (Fig. 2 und 3). Die beiden Absaugmodule 24, 25 haben gleiche Höhe wie die eingangsseitigen Module 17, 18. Ihre beiden Innenseiten 26, 27 (Fig. 2) verlaufen, bezogen auf die Transportrichtung 2, von den eingangsseitigen Modulen 17, 18 aus divergierend zueinander (Fig. 2). Die Innenseiten 26, 27 sind eben und schließen an zueinander parallele und in Transportrichtung 2 sich erstreckende Innenseiten 28, 29 von zwei einander gegenüberliegenden Kanalmodulen 30, 31 an. Die Absaugmodule 24, 25 sind in Transportrichtung 2 länger als die eingangsseitigen Module 17, 18, jedoch kürzer als die anschließenden Kanalmodule 30, 31. Auch die Innenseiten 28, 29 der Kanalmodule 30, 31 sind eben.

In den Absaugmodulen 24, 25 befinden sich Absaugkanäle 32, 33, über welche die mit Schmutz/Staubteilchen vermengte Luft von Ventilatoren 34 abgesaugt wird. In den Absaugkanälen 32, 33 befinden sich Filter 35 (Fig. 3), in denen die Staub/Schmutzteilchen abgefangen werden.

Auf der vom Innenraum 3 abgewandten Außenseite sind die Absaugmodule 24, 25 mit wenigstens einer Tür 36, 37 versehen, durch welche die Absaugmodule 24, 25 betreten werden können. Die Türen 36, 37 sind als Sicherheitstüren ausgebildet, die nur dann geöffnet werden können, wenn die Reinigungsvorrichtung nicht in Betrieb ist.

Die Kanalmodule 30, 31 enthalten ebenfalls jeweils einen Absaugkanal 38, 39, der mit dem jeweiligen Absaugkanal 32, 33 in den Absaugmodulen 24, 25 leitungsverbunden ist. Somit kann die mit den Staub/Schmutzteilchen vermengte Luft aus dem Innenraum 3 optimal abgesaugt werden. Die Absaugmodule 24, 25 und die Kanalmodule 30, 31 haben in den Innenseiten 26, 27 und 28, 29 liegende Absaugöffnungen, die in die jeweiligen Absaugkanäle 32, 33 und 38, 39 münden.

In Transportrichtung 2 liegt hinter den Kanalmodulen 30, 31 jeweils ein Versorgungsmodul 40, 41, auf dem sich jeweils ein Ventilator 42, 43 befindet. Die Versorgungsmodule 40, 41 sind ebenfalls quaderförmig ausgebildet und haben vorteilhaft gleiche Höhe wie die übrigen Module (Fig. 3). Die dem Innenraum 3 zugewandten Innenseiten 44, 45 (Fig. 2) sind eben und liegen bündig zu den Innenseiten 28, 29 der Kanalmodule 30, 31. Die Versorgungsmodule 40, 41 sind auf ihren vom Innenraum 3 abgewandten Außenseiten mit wenigstens einer Tür 46, 47 versehen, über die das jeweilige Versorgungsmodul betreten werden kann. Auch diese Türen 46, 47 sind als Sicherheitstüren ausgebildet, die nur geöffnet werden können, wenn die Reinigungsvorrichtung nicht in Betrieb ist. In den Versorgungsmodulen 40, 41 sind die zu den Ventilatoren 42, 43 gehörenden mechanischen und elektrischen bzw. elektronischen Komponenten untergebracht.

Über die Ventilatoren 42, 43 wird Druckluft einer Dachdüse 48 zugeführt, die sich über die Breite des Innenraumes 3 horizontal erstreckt und in Z-Richtung programmgesteuert verfahrbar ist. Entsprechend der Form der zu reinigenden Karosserie 1 wird die Dachdüse 48 in vertikaler Richtung im Innenraum 3 verschoben. Für diese Verschiebbarkeit in Z-Richtung ist die Dachdüse 48 mit ihren beiden Enden in Schlitten 49, 50 gelagert, die in jeweils einem Führungsmodul 51, 52 untergebracht sind. Sie sind ebenfalls quaderförmig ausgebildet und haben vorteilhaft gleiche Höhe wie die übrigen Module. An die beiden Enden der Dachdüse 48 ist jeweils eine Zuführleitung 53, 54 (Fig. 2) für die Druckluft angeschlossen, über welche die Druckluft vom Ventilator 42, 43 mit hohem Druck der Dachdüse 48 zugeführt wird. In den Führungsmodulen 51, 52 sind den Schlitten 49, 50 Gegengewichte 55, 56 zugeordnet, so daß die Schlitten 49, 50 mit geringer Kraft verfahren werden können. Die Schlitten 49, 50 können in jeder geeigneten Weise ausgebildet sein. Es ist möglich, die beiden Schlitten 49, 50 mit Zahnrädern zu versehen, die in vertikal angeordnete Zahnstangen eingreifen, die in den Führungsmodulen 51, 52 vorgesehen sind. Die Führungsmodule 51, 52 sind an ihrer dem Innenraum 3 zugewandten Innenseite 57, 58 mit einem in Höhenrichtung sich erstreckenden Schlitz versehen, durch den die Enden der Dachdüse 48 in die Führungsmodule ragen. Diese Schlitze sind so bemessen, daß die im Innenraum 3 während des Reinigungsvorganges anfallenden Staub/Schmutzteilchen nicht in die Führungsmodule 51, 52 gelangen.

Die Dachdüse 48 ist vorteilhaft um ihre Längsachse 59 drehbar, so daß die Richtung der aus der schlitzförmigen Düsenöffnung 60 austretenden Druckluft einfach an die Form der Karosserie 1 angepaßt werden kann.

Die Führungsmodule 51, 52 sind an ihrer vom Innenraum 3 abgewandten Außenseite mit jeweils einer Tür 61, 62 versehen, durch welche die Führungsmodule betreten werden können. Die Türen 61, 62 sind als Sicherheitstüren ausgebildet, so daß während des Betriebes der Reinigungsvorrichtung die Führungsmodule 51, 52 nicht betreten werden können.

An die Führungsmodule 51, 52 schließen Düsenmodule 63, 64 an, die vorteilhaft gleiche Höhe wie die übrigen Module haben. In den Düsenmodulen 63, 64 ist jeweils eine Seitendüse 65, 66 gelagert, die durch jeweils einen Schlitz in der Innenseite 67, 68 der Düsenmodule 63, 64 geringfügig in den Innenraum 3 ragen. Die Seitendüsen 65, 66 erstrecken sich zumindest über die halbe Höhe des Innenraumes 3, vorzugsweise über nahezu dessen gesamte Höhe. Die Seitendüsen 65, 66 haben jeweils eine schlitzförmige Düsenöffnung 69, 70, durch welche Druckluft schräg nach innen in den Innenraum 3 geblasen wird (Fig. 1). Vorteilhaft sind die Seitendüsen 65, 66 um eine vertikale, innerhalb der Düsenmodule 63, 64 liegende Achse 71, 72 schwenkbar, so daß die aus den Düsenöffnungen 69, 70 austretende Druckluft an die jeweilige Karosserie 1 einfach angepaßt werden kann. Die Düsenmodule 63, 64 oder die Seitendüsen 65, 66 können auch in Y-Richtung verstellbar oder zum Konturenfahren ausgebildet sein. Die Düsenmodule 63, 64 sind auf ihren Außenseiten wiederum mit jeweils einer Sicherheitstür 73, 74 versehen, über die die Düsenmodule 63, 64 für Reinigungs- und/oder Reparaturfälle betreten werden können. Die Innenseiten 67, 68 der Düsenmodule 63, 64 sind wiederum eben und liegen fluchtend zu den benachbarten ebenen Innenseiten 57, 58 der Führungsmodule 51, 52.

Auf den Düsenmodulen 63, 64 sitzt jeweils ein Ventilator 75, 76, über den die Druckluft den Seitendüsen 65, 66 zugeführt wird.

An die Düsenmodule 63, 64 schließen in Transportrichtung 2 Module 77, 78 an, welche die austrittsseitige Düseneinrichtung 10 tragen. Diese Module 77, 78 sind vorteilhaft gleich hoch wie die übrigen Module.

Sämtliche Module sind auf dem Grundrahmen 20 (Fig. 3) befestigt, der mit den Füßen 21 und den Stellschrauben 23 optimal auf dem Untergrund 22 abgestützt werden kann.

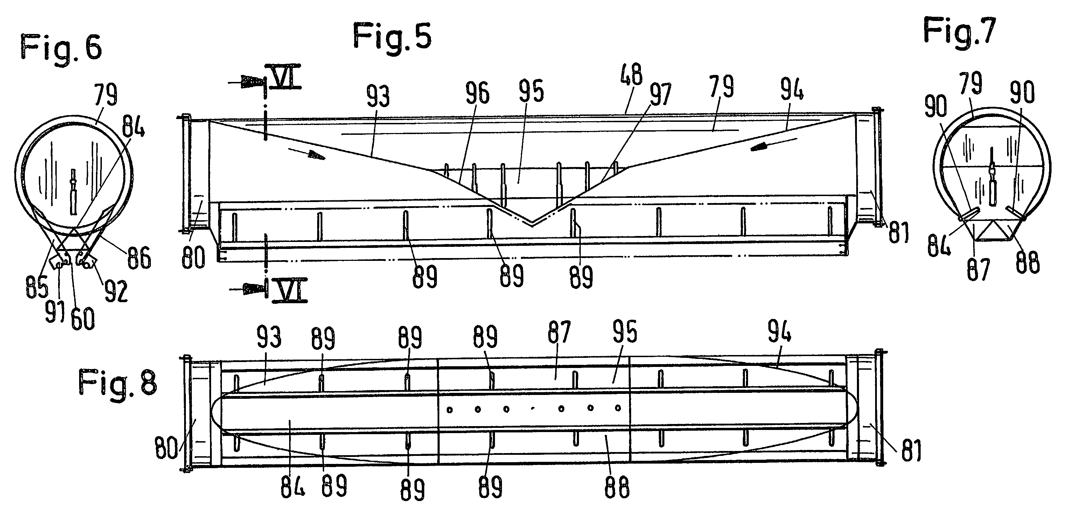

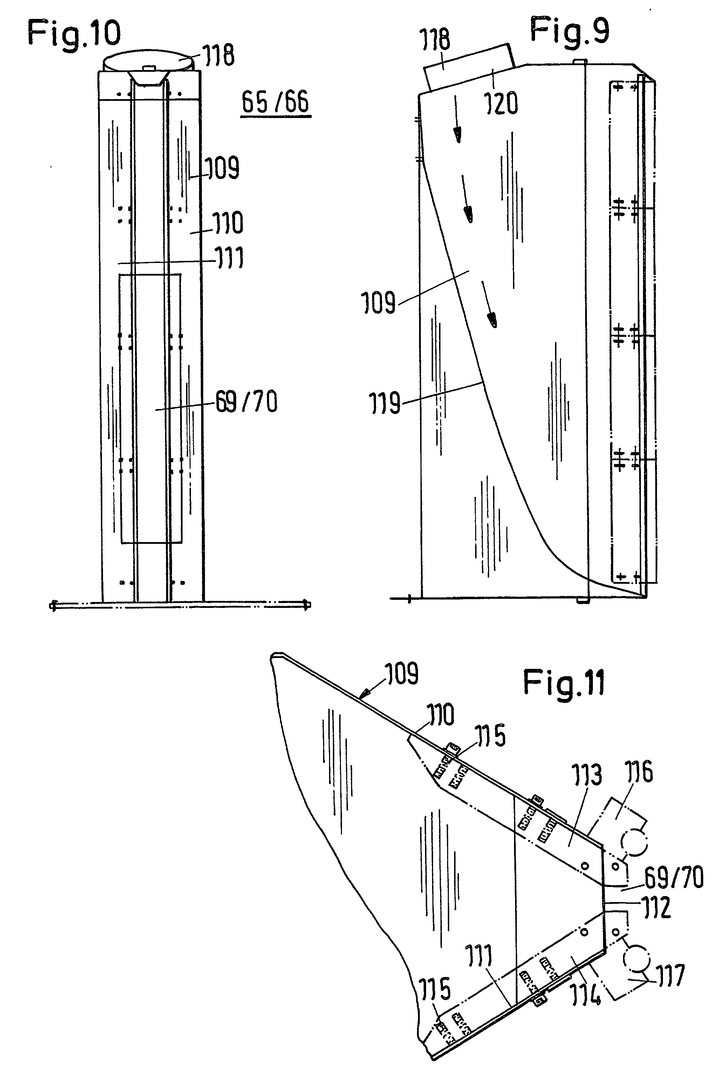

Die Dachdüse 48 (Fig. 5 bis 8) hat einen annähernd zylindrischen Mantel 79, an dessen beiden Enden jeweils ein zylindrischer Flansch 80, 81 vorgesehen ist. Mit den Flanschen wird die Dachdüse 48 auf jeweils einem Gegenflansch 82 (Fig. 13) lösbar befestigt, der jeweils einem Lagerrohr 83 zugeordnet ist. Die beiden Lagerrohre 83 sind, wie Fig. 2 zeigt, in den Schlitten 49, 50 gelagert. Der Mantel 79 weist einen über nahezu seine gesamte Länge sich erstreckenden Schlitz 84 auf (Fig. 5 bis 8), durch den zwei mit Abstand einander gegenüberliegende Leisten 85, 86 ragen (Fig. 6). Sie konvergieren in Richtung auf ihre freien Enden und begrenzen die schlitzartige Düsenöffnung 60, durch welche die Druckluft in den Innenraum 3 eintritt. Zur Befestigung der gleich ausgebildeten Leisten 85, 86 hat der Mantel 59 von den Rändern des Schlitzes 84 abstehende, blechförmige Verlängerungen 87, 88 (Fig. 7), die außerhalb des Mantels 79 gerade verlaufen und die mit vorzugsweise in gleichmäßigen Abständen voneinander angeordneten Längsschlitzen 89 versehen sind (Fig. 5 und 8). Sie dienen zur Aufnahme von Schrauben 90 (Fig. 7), mit denen die Leisten 85, 86 an der Innenseite der Verlängerungen 87, 88 festgeschraubt werden. Die Längsschlitze 89 erstrecken sich senkrecht zur Längsrichtung der Verlängerungen 87, 88. Aufgrund dieser Längsschlitze 89 kann der Überstand der Leisten 85, 86 über die Verlängerungen 87, 88 stufenlos eingestellt werden. Auf diese Weise läßt sich die Weite der Düsenöffnung 60 optimal einstellen. An den Leisten 85, 86 ist jeweils ein lonisator 91, 92 befestigt (Fig. 6), mit dem die Druckluft vor dem Eintritt in den Innenraum 3 ionisiert werden kann.

Die Druckluft wird von beiden Enden der Dachdüse 48 aus in Richtung der Pfeile 93, 94 (Fig. 5) von den Ventilatoren 75, 76 aus zugeführt. In der Dachdüse 48 befinden sich zwei Leitbleche 93, 94, die sich von den endseitigen Flanschen 80, 81 aus schräg in Richtung auf den Schlitz 84 bzw. die Düsenöffnung 60 erstrecken. Wie die Fig. 5 und 8 zeigen, erweitern sich die Leitbleche 93, 94 von ihrem bei den Flanschen 80, 81 liegenden und dem Schlitz 84 gegenüberliegenden Ende aus stetig bis auf den Innendurchmesser des Mantels 79. Zwischen den beiden Leitblechen 93, 94 ist ein Zwischenstück 95 eingesetzt, das in Seitenansicht Dreieckform hat und zwei unter einem stumpfen Winkel zueinander liegende Leitflächen 96, 97 aufweist, die an die Leitbleche 93, 94 in Seitenansicht stumpfwinklig anschließen und die Druckluft weiter in Richtung auf die Düsenöffnung 60 lenken. Das Zwischenstück 95 ragt mit seiner Spitze bis nahe an die Düsenöffnung 60. Aufgrund der beschriebenen Ausbildung wird durch die Dachdüse 48 gewährleistet, daß die Druckluft über die gesamte Breite der Düsenöffnung 60 gleichmäßig in den Innenraum 3 mit hohem Druck geblasen wird, so daß die zu reinigende Karosserie 1 optimal von diesem Luftstrom erfaßt wird.

Die Dachdüse 48 kann um ihre Achse 59 geschwenkt werden, so daß die in den Innenraum 3 gerichtete Düsenöffnung 60 in unterschiedlichen Winkeln zur Horizontalen in den Innenraum eingeblasen werden kann. In Verbindung mit der Verfahrbarkeit der Dachdüse 48 in Z-Richtung kann auf diese Weise die Karosserie 1 optimal mit dem Druckluftstrom gereinigt werden. Der entsprechende Drehantrieb für die Dachdüse 48 ist an sich bekannt und wird nicht näher beschrieben. Er ist ebenfalls wie die Schlitten 49, 50 in den Führungsmodulen 51, 52 außerhalb des Innenraumes 3 untergebracht.

Bei einer (nicht dargestellten) Ausführungsform kann die Dachdüse 48 auch entgegen Transportrichtung 2 in X-Richtung verfahrbar ausgebildet sein. Dann lassen sich höhere Fördergeschwindigkeiten der Karosserie 1 durch die Reinigungsvorrichtung erzielen.

Für den Einbau der Dachdüse 48 ist ein geringes axiales Spiel vorgesehen, um unterschiedliche Abstände zwischen den senkrecht zur Transportrichtung 2 einander gegenüberliegenden Führungsmodulen 51, 52 überbrücken zu können. Am freien Ende des Lagerrohres 83 ist ein Träger 98 lösbar befestigt, der scheibenförmig ausgebildet ist und größeren Durchmesser als das Lager 83 hat (Fig. 13). Am überstehenden Teil sitzt auf dem Träger 98 ein Druckring 99, mit dem ein Dichtungsring 100 elastisch verformt wird. Er liegt innerhalb eines auf dem Lagerrohr 83 gelagerten zylindrischen Zwischenstückes 101. Es ist mit dem Gegenflansch 82 versehen, der am Umfang dieses Zwischenstückes 101 befestigt ist. Das Zwischenstück 101 hat einen radial nach innen gerichteten Flansch 102, der an der Außenseite des Lagerrohres 83 anliegt. Der Dichtungsring 100 liegt auf dem Flansch 102 unter der Kraft des Druckringes 99 auf und liegt mit seiner Innen- und Außenseite an der Außenseite des Lagerrohres 83 sowie an der Innenseite des Zwischenstückes 101 dichtend an.

Am Gegenflansch 82 ist ein Steg 103 befestigt, der axial in das Lagerrohr 83 ragt und mit seinem freien Ende an einer Halterung 104 des Lagerrohres 83 unter Zwischenlage eines Schwingungsdämpfungselementes 105 befestigt ist. Es sitzt auf einem Gewindebolzen 106, der durch eine Kontermutter 107 gesichert ist. Der Gewindebolzen 106 ragt durch ein Langloch 108 des Steges 103. Über die Länge des in Achsrichtung des Lagerrohres 83 sich erstreckenden Langloches 108 kann das Zwischenstück 101 mit dem Gegenflansch 82 relativ zum Lagerrohr 83 verschoben werden, um Variationen im Abstand zwischen den beiden Führungsmodulen 51, 52 ausgleichen zu können.

Die Seitendüsen 65, 66 sind ähnlich ausgebildet wie die Dachdüse 48. Wie sich aus den Fig. 9 bis 11 ergibt, haben die Seitendüsen 65, 66 einen Grundkörper 109, der mit konvergierend zueinander verlaufenden Seitenteilen 110, 111 versehen ist. Sie sind eben ausgebildet und begrenzen einen über die Höhe der Seitendüse 65, 66 durchgehenden Schlitz 112. An der Innenseite der Seitenteile 110, 111 sind Leisten 113, 114 befestigt, die vorteilhaft gleich ausgebildet sind wie die Leisten 85, 86 der Dachdüse 48. Die Leisten 113, 114 werden mit Schrauben 115 an der Innenseite der Seitenteile 110, 111 befestigt. Die Schrauben 115 ragen durch (nicht dargestellte) Längsschlitze, die sich senkrecht zur Längsachse der Leisten 113, 114 erstrecken. Die Leisten 113, 114 stehen über die Seitenteile 110, 111 vor und begrenzen die schlitzförmigen Düsenöffnungen 69, 70. Infolge der Längsschlitze in den Seitenteilen 110, 111 läßt sich der Überstand der Leisten 113, 114 über die Seitenteile und damit die Breite der Düsenöffnungen 69, 70 stufenlos einstellen. Die Leisten 113, 114 tragen lonisatoren 116, 117, mit denen die aus den Düsenöffnungen 69, 70 austretende Druckluft ionisiert wird.

Die beiden Seitendüsen 65, 66 haben einen oberen Anschluß 118, über den die Druckluft von den Ventilatoren 75, 76 zugeführt wird. Innerhalb des Grundkörpers 109 ist eine Leitwand 119 vorgesehen, die die über den Anschluß 118 zugeführte Druckluft schräg nach unten lenkt. Die Leitwand 119 erstreckt sich vom oberen Ende der Seitendüse 65, 66 von der der Düsenöffnung 69, 70 gegenüberliegenden Seite aus geneigt nach unten. Das andere Ende der Leitwand 119 liegt in Höhe des unteren Randes der Düsenöffnung 69, 70 (Fig. 9). Der Anschluß 118 liegt auf einem geneigt verlaufenden Oberteil 120 des Grundkörpers 109. Dies hat den Vorteil, daß die durch den Anschluß 118 strömende Druckluft bereits schräg in Richtung auf die Düsenöffnung 69, 70 in den Grundkörper 109 strömt.

Wie sich aus Fig. 1 ergibt, strömt die mit Staub/Schmutzteilchen versetzte Druckluft über Leitungen 121, 122 aus den Absaugmodulen 24, 25 dem Ventilator 34 zu. Ihm nachgeschaltet ist eine Filtereinheit 123, in der die Druckluft von Staub- und Schmutzteilchen gereinigt und gegebenenfalls befeuchtet wird. Die Filtereinheit 123 kann Trokken- oder Naßfilter aufweisen. Die Druckluft wird dann über eine Leitung 124 den Ventilatoren 42, 43 und 75, 76 zugeführt. Von hier aus strömt die Druckluft über Leitungen 125, 126 und 127, 128 den Versorgungsmodulen 40, 41 und den Düsenmodulen 63, 64 zu. Außerdem gelangt die Druckluft in die Düseneinrichtungen 10 am Eintritts- und Austrittsende der Reinigungsvorrichtung. Die Druckluft wird somit im Kreislauf bewegt, so daß der Energieverbrauch gering gehalten werden kann. Über eine Leitung 129 wird Außenluft der Filtereinheit 23 nachgeführt, um Druckluftverluste auszugleichen.

Da der Innenraum 3 von ebenen Seitenwänden 26, 28, 44, 57, 67, 27, 29, 45, 58, 68 begrenzt ist, können sich im Innenraum 3 keine Staub/Schmutzteilchen verfangen und niedersetzen. Aufgrund der glatten Seitenwände gelangen die Staub/Schmutzteilchen zuverlässig zu den Absaugmodulen 24, 25 und den Kanalmodulen 30, 31. Auch im Bereich der höhenverstellbaren Dachdüse 48 sowie der verschwenkbaren Seitendüsen 65, 66 sind die Durchtrittsöffnungen in den Innenwandungen 57, 67, 58, 68 der Module 51, 63, 52, 64 weitgehend geschlossen und eben. Die für den Antrieb dieser Düsen 48, 65, 66 erforderlichen Aggregate liegen geschützt innerhalb der zugehörigen Module 51, 63, 52, 64, so daß sie nicht zu einer Verschmutzung des Innenraumes 3 beitragen können. Auf diese Weise tritt im Innenraum 3 nur ein sehr geringer, vernachlässigbarer Anteil an Staub/Schmutz auf, so daß der Innenraum auch nach längerer Einsatzdauer sauber ist.

Die Düsen 11 der beiden Düseneinrichtungen 10 sind vorteilhaft einzeln einstellbar, so daß die Strömungsrichtung der aus ihnen austretenden Druckluftströme optimal auf die zu reinigende Karosserie 1 eingestellt werden kann. Wie Fig. 1 zeigt, werden die Düsen 11 der Düseneinrichtungen 10 so eingestellt, daß die Druckluft schräg nach innen in den Innenraum 3 strömt. Bei der eingangsseitigen Düseneinrichtung 10 ist die Strahlrichtung so eingestellt, daß der Gesamtdruckstrom in Richtung auf die Absaugmodule 24, 25 gerichtet ist. Die Düsen 11 der ausgangsseitigen Düseneinrichtung 10 sind im wesentlichen so eingestellt, daß die austretende Druckluft in Richtung auf die Karosserie 1 gerichtet ist. Die Seitendüsen 65, 66 ihrerseits werden so eingestellt, daß die aus den spaltförmigen Düsenöffnungen 69, 70 austretenden Luftströme unter verhältnismäßig steilen Winkeln schräg auf die Karosserie 1 treffen.

Da die Innenseiten 26, 27 der Abluftmodule 24, 25 in Transportrichtung 2 divergierend zueinander angeordnet sind, ergibt sich eine sehr große wirksame Eintrittsfläche für die mit Staub/Schmutzteilchen versetzte Druckluft, so daß sie zuverlässig über die (nicht dargestellten) Absaugöffnungen in den Innenseiten 26, 27 der Absaugmodule 24, 25 abgesaugt werden kann. Ein Teil der Druckluft wird, wie sich aus Fig. 1 ergibt, auch über die in den Innenseiten 28, 29 der Kanalmodule 30, 31 befindlichen Öffnungen abgesaugt.

Die Dachdüse 48 läßt sich vorzugsweise maximal so weit um ihre Längsachse 59 drehen, daß die aus der Düsenöffnung 60 austretende Druckluft in einem Falle horizontal und im anderen Falle vertikal austritt.

Die gesamte Reinigungsvorrichtung wird aus einzelnen Modulen zusammengebaut, so daß die Reinigungsvorrichtung in einfacher Weise an den jeweiligen Einsatzfall angepaßt werden kann. So können die Längsabmessungen der Reinigungsvorrichtung sehr einfach durch Einfügen bzw. Weglassen von Modulen verändert werden. Die Modulbauweise hat ferner den Vorteil, daß einzelne Module im Reparatur- oder Wartungsfall einfach ersetzt bzw. ausgetauscht werden können. Insbesondere können die einzelnen Module variabel auf dem Grundrahmen 20 angeordnet werden, so daß die Reinigungsvorrichtung problemlos an unterschiedliche Anforderungen angepaßt werden kann. So ist es beispielsweise ohne weiteres möglich, zusätzlich zu den zwei Düsenmodulen 63, 64 mit den Seitendüsen 65, 66 weitere Düsenmodule einzubauen. Je nach Kundenwunsch werden die verschiedenen Module zur Reinigungsvorrichtung zusammengesetzt.

Die verfahrbare Dachdüse 48 ist vorteilhaft mit einem Kollisionsschutz versehen, so daß nicht die Gefahr besteht, daß die Dachdüse mit der zu reinigenden Karosserie 1 in Kontakt kommt. Sämtliche Module sind von der Außenseite der Reinigungsvorrichtung zugänglich, so daß Reparatur- oder Wartungsarbeiten einfach durchgeführt werden können. Aus Sicherheitsgründen sind die einzelnen Türen zu den Modulen nur dann zu öffnen, wenn die Reinigungsvorrichtung nicht in Betrieb ist. Die Filter 35 in den Absaugmodulen 24, 25 sind vorteilhaft austauschbar, so daß sie bei Bedarf einfach ausgewechselt werden können. Auch die Filter der Filtereinheit 123 sind vorteilhaft austauschbar.

## Patentansprüche

1. Reinigungsvorrichtung für Karosserien von Fahrzeugen, vorzugsweise von Personen- und Lastkraftwagen, mit mindestens einer Transportvorrichtung (2) für die Karosserie (1), die durch einen Innenraum der Reinigungsvorrichtung transportierbar und mit Druckluft beaufschlagbar ist, die aus mindestens einer Seitendüse (65, 66) und mindestens einer Dachdüse (48) in Richtung auf die Karosserie (1) austritt, wobei die Seitendüsen (65, 66) und die Dachdüse (48) Modulen (63, 64; 51, 52) zugeordnet sind, die lösbar auf einem Unterteil (20) befestigt sind, **dadurch gekennzeichnet, daß** die Reinigungsvorrichtung für die Druckluft wenigstens eine Absaugung aufweist, die mindestens ein Absaugmodul (24, 25) aufweist, das lösbar auf dem Unterteil (20) befestigt ist und wenigstens eine Absaugöffnung aufweist, die in einer schräg zur Transportrichtung (2) liegenden Seitenwand (26, 27) des Innenraumes (3) vorgesehen ist, wobei vorzugsweise die Seitenwände (57, 58; 67, 68) der übrigen Module (51, 52; 63, 64) parallel zur Transportrichtung (2) der Karosserie (1) liegen.

2. Reinigungsvorrichtung nach Anspruch 1,
**dadurch gekennzeichnet, daß** die Module (24, 25; 51, 52; 63, 64) aneinander anschließen und vorzugsweise paarweise vorgesehen sind und quer zur Transportrichtung (2) einander gegenüberliegen.

3. Reinigungsvorrichtung, insbesondere nach Ansprüch 1 oder 2,
**dadurch gekennzeichnet, daß** zumindest einige der Module (24, 25; 51, 52; 63, 64), vorzugsweise alle Module, ebene, den Innenraum (3) begrenzende Seitenwände (26, 27; 57, 58; 67, 68) haben.

4. Reinigungsvorrichtung nach einem der Ansprüche 1 bis 3,
**dadurch gekennzeichnet, daß** die Dachdüse (48) in Höhenrichtung und vorzugsweise um ihre Achse (59) verstellbar ist.

5. Reinigungsvorrichtung nach einem der Ansprüche 1 bis 4,
**dadurch gekennzeichnet, daß** Zuleitungen zur Dachdüse (48) innerhalb des zugehörigen Moduls (51, 52) untergebracht sind und daß vorteilhaft die Dachdüse (48) mit wenigstens einem Ende gegenüber einem Lagerrohr (83) der Dachdüse (48) axial verstellbar ist.

6. Reinigungsvorrichtung nach einem der Ansprüche 1 bis 5,
**dadurch gekennzeichnet, daß** die Seitendüse (65, 66) um eine vertikale Achse (71, 72) verstellbar ist.

7. Reinigungsvorrichtung nach einem der Ansprüche 1 bis 6,
**dadurch gekennzeichnet, daß** am Eingang und am Ausgang des Innenraumes (3) jeweils ein Luftschirm vorgesehen ist, und daß vorzugsweise eine vorteilhaft U-förmig ausgebildete Düseneinrichtung (10) vorgesehen ist, die mit einzelnen, vorzugsweise verstellbaren Düsen (11) versehen ist.

8. Reinigungsvorrichtung nach einem der Ansprüche 1 bis 7,
**dadurch gekennzeichnet, daß** die Weite der Düsenöffnung (60) der Dachdüse (48) einstellbar ist, und daß vorteilhaft die Düsenöffnung (60) durch zwei schräg zueinander liegende Leisten (85, 86) begrenzt ist, die an der Dachdüse (48) verstellbar vorgesehen sind.

9. Reinigungsvorrichtung nach einem der Ansprüche 1 bis 8,
**dadurch gekennzeichnet, daß** die Weite der Düsenöffnungen (69, 70) der Seitendüse (65, 66) verstellbar ist und daß vorzugsweise die Düsenöffnung (69, 70) durch zwei schräg zueinander liegende Leisten (113, 114) begrenzt ist, die an der Seitendüse (65, 66) verstellbar vorgesehen sind.

10. Reinigungsvorrichtung nach einem der Ansprüche 1 bis 9,
**dadurch gekennzeichnet, daß** das vorteilhaft Füße (21) mit Stellschrauben (23) aufweisende Unterteil (20) ein Rahmen ist, dessen Bodenabstand vorzugsweise einstellbar ist.

11. Reinigungsvorrichtung nach einem der Ansprüche 1 bis 10,
**dadurch gekennzeichnet, daß** Ventilatoren (32; 34; 42, 43; 75, 76) zur Absaugung und zum Einbringen der Druckluft auf den Modulen (24, 25; 40, 41; 63, 64) angeordnet sind.

12. Reinigungsvorrichtung nach einem der Ansprüche 1 bis 11,
**dadurch gekennzeichnet, daß** die Seitendüse (65, 66) um eine horizontale Achse senkrecht zur Transportrichtung (2) verstellbar ist.

## Claims

1. Cleaning assembly for body of vehicles, preferably of passenger cars and lorries with at least one transportation device (2) for the body (1) transportable through the inner space of the cleaning assembly and chargeable with compressed air which escapes out of at least one side jet (65, 66) and at least one roof jet (48) in the direction of the body (1) whereby the side jets (65, 66) and the roof jet (48) are associated to modules (63, 64; 51, 52) which are detachably fastened on a bottom part (20),
**characterised in that** the cleaning assembly for the compressed air comprises at least one suction device comprising at least one suction module (24, 25) which is detachably fastened on the bottom part (20) and comprises at least one suction opening provided within a side wall (26, 27) of the inner space (3), situated at an inclination to the transportation direction (2), whereby preferably the side walls (57, 58; 67, 68) of the remaining modules (51, 52; 63, 64) are placed parallel to the transportation direction (2) of the body (1).

2. Cleaning assembly according to claim 1,
**characterised in that** the modules (24, 25; 51, 52; 63, 64) annex each other and preferably are provided in pairs and are opposing each other transversely to the transportation direction (2).

3. Cleaning assembly according particularly to claim 1 or 2,
**characterised in that** at least some of the modules (24, 25; 51, 52; 63, 64), preferably all modules have plane side walls (26, 27; 57, 58; 67, 68), limiting the internal space (3).

4. Cleaning assembly according to one of the claims 1 to 3,
**characterised in that** the roof jet (48) is adjustable in the direction of height and preferably around its axis (59).

5. Cleaning assembly according to one of the claims 1 to 4,
**characterised in that** the supply lines to the roof jet (48) are accommodated within the accompanying module (51, 52) and that advantageously the roof jet (48) is adjustable axially with at least one end with regard to a bearing tube (83) of the roof jet (48).

6. Cleaning assembly according to one of the claims 1 to 5,
**characterised in that** the side jet (65, 66) is adjustable around a vertical axis (71, 72).

7. Cleaning assembly according to one of the claims 1 to 6,
**characterised in that** respectively at the entry and at the exit of the inner space (3) an air curtain is provided and that preferably a jet device (10) is provided advantageously formed U-shaped, equipped with some, preferably adjustable jets (11).

8. Cleaning assembly according to one of the claims 1 to 7,
**characterised in that** the width of the jet opening (60) of the roof jet (48) is adjustable and that advantageously the jet opening (60) is limited by two ledges (85, 86) inclined obliquely to each other, which are provided to be adjustable at the roof jet (48).

9. Cleaning assembly according to one of the claims 1 to 8,
**characterised in that** the width of the jet openings (69, 70) of the side jet (65, 66) is adjustable and that preferably the jet opening (69, 70) is limited by two ledges (113, 114) inclined obliquely to each other, which are provided to be adjustable at the side jet (65, 66).

10. Cleaning assembly according to one of the claims 1 to 9,
**characterised in that** the bottom part (20) advantageously comprising feet (21) with setscrews (23) is a frame, the ground clearance of which preferably is adjustable.

11. Cleaning assembly according to one of the claims 1 to 10,
**characterised in that** ventilators (32; 34; 42, 43; 75, 76) are arranged on the modules (24, 25; 40, 41; 63, 64) for suction and for input of the compressed air.

12. Cleaning assembly according to one of the claims 1 to 11,
**characterised in that** the side jet (65, 66) is adjustable around a horizontal axis normal to the direction of transport (2).

## Revendications

1. Installation de nettoyage pour carrosserie de véhicules de préférence de voitures particulières et de camions avec au moins un dispositif de transport (2) pour la carrosserie (1), transportable à travers un intérieur de l'installation de nettoyage et alimentable par air comprimé s'échappant d'au moins une buse latérale (65, 66) et d'au moins une buse de toit (48) en direction de la carrosserie (1) et de plus les buses latérales (65, 66) et la buse de toit (48) sont adjointes à des modules (63, 64; 51, 52) fixés amoviblement sur une substructure (20),
**caractérisée en ce que** l'installation de nettoyage pour l'air comprimé comprend au moins une aspiration comprenant au moins un module d'aspiration (24, 25) fixé amoviblement sur la substructure (20) et celui-ci présentant au moins une ouverture d'aspiration prévue dans une paroi latérale (26, 27) d'intérieur (3) située obliquement vers la direction de transport et de plus de préférence les parois latérales (57, 58; 67, 68) des modules restants (51, 52; 63, 64) sont situées parallèlement vers la direction de transport (2) de la carrosserie (1).

2. Installation de nettoyage selon revendication 1,
**caractérisée en ce que** les modules (24, 25; 51, 52; 63, 64) sont adjoints l'un à l'autre et prévus de préférence par paire et sont opposés l'un à l'autre en travers de la direction de transport (2).

3. Installation de nettoyage particulièrement selon revendication 1 ou 2,
**caractérisée en ce qu'**au moins quelques-uns des modules (24, 25; 51, 52; 63, 64), de préférence tous, ont des parois latérales (26, 27; 57, 58; 67, 68) planes, limitant l'intérieur (3).

4. Installation de nettoyage selon une des revendications 1 à 3,
**caractérisée en ce que** la buse de toit (48) est réglable en direction de la hauteur et de préférence sur son axe (59).

5. Installation de nettoyage selon une des revendications 1 à 4,
**caractérisée en ce que** des amenées vers la buse de toit (48) sont logées à l'intérieur du module (51, 52) correspondant et qu'avantageusement la buse de toit (48) est déplaçable axialement par au moins une extrémité face à un tube de palier (83) de la buse de toit (48).

6. Installation de nettoyage selon une des revendications 1 à 5,
**caractérisée en ce que** la buse latérale (65, 66) est réglable sur un axe (71, 72) vertical.

7. Installation de nettoyage selon une des revendications 1 à 6,
**caractérisée en ce que** respectivement à l'entrée et à la sortie de l'intérieur (3) un rideau d'air est prévu et que de préférence un dispositif de buse (10) est prévu, avantageusement façonné en forme d'U, lequel est muni des buses (11) individuelles, de préférence réglables.

8. Installation de nettoyage selon une des revendications 1 à 7,
**caractérisée en ce que** l'ampleur de l'ouverture de buse (60) de la buse de toit (48) est ajustable et qu'avantageusement l'ouverture de buse (60) est limitée par deux listels (85, 86) situés obliquement l'un à l'autre, lesquels sont prévus ajustables à la buse de toit (48).

9. Installation de nettoyage selon une des revendications 1 à 8,
**caractérisée en ce que** l'ampleur des ouvertures de buse (69, 70) de la buse latérale (65, 66) est ajustable et que de préférence l'ouverture de buse (69, 70) est limitée par deux listels (113, 114) situés obliquement l'un à l'autre, lesquels sont prévus ajustables à la buse latérale (65, 66).

10. Installation de nettoyage selon une des revendications 1 à 9,
**caractérisée en ce qu'**avantageusement la substructure (20) comprenant des pieds (21) avec vis de réglage (23) est un cadre, dont la garde au sol est de préférence ajustable.

11. Installation de nettoyage selon une des revendications 1 à 10,
**caractérisée en ce que**, pour l'aspiration et pour l'introduction de l'air comprimé, des ventilateurs (32; 34; 42; 43; 75, 76) sont disposés sur les modules (24, 25; 40, 41; 63, 64).

12. Installation de nettoyage selon une des revendications 1 à 11,
**caractérisée en ce que** la buse latérale (65, 66) est ajustable sur un axe horizontal, situé verticalement à la direction de transport (2):
